# EUROPEAN PATENT SPECIFICATION

(11) **EP 2 221 951 B1**
(45) Date of publication and mention of the grant of the patent: **13.04.2016**
(21) Application number: 09250466.1
(22) Date of filing: 23.02.2009
(51) Int. Cl.: H02M 3/158

(54) **Boost converter for voltage boosting**
Hochsetzsteller zur Spannungserhöhung
Convertisseur élévateur pour éléver la tension

(43) Date of publication of application: 25.08.2010
(73) Proprietor: Hungkuang University, Shalu, Taichung County (TW)
(72) Inventor: Duan, Rou-Yong, Nantou County (TW); Luo, Rong-Da, Taichung County (TW)
(74) Representative: Mounteney, Simon James

(56) References cited:
- US-A- 4 384 321
- US-A1- 2005 185 432

## Description

The invention relates to a boost device, more particularly to a DC-to-DC boost device.

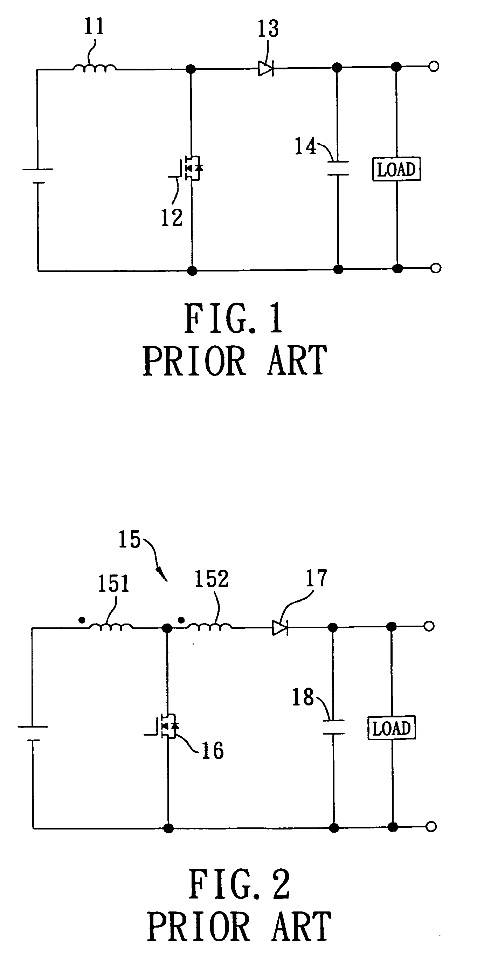

Referring to Figure 1, a conventional boost device is shown to include an inductor 11, a switch 12, a diode 13, and a capacitor 14. The inductor 11 has a first end coupled to an external power source, and a second end. The switch 12, such as a semiconductor power switch, has a first terminal coupled to a common node between the second end of the inductor 11 and an anode of the diode 13, a second terminal coupled to ground, and a control terminal for receiving an external control signal such that the switch 12 is operable between an ON-state and an OFF-state in response to the external control signal. The capacitor 14 is coupled between a cathode of the diode 13 and ground.

When the switch 12 is operated in the ON-state, a current from the external power source flows through the inductor 11 to store electric power. When the switch 12 is operated in the OFF-state, the capacitor 14 is charged with a current from the inductor 12 through the diode 13 such that the conventional boost device outputs an output voltage, i.e., a voltage across the capacitor 14, to a load.

The following are some of the drawbacks of the conventional boost device:
1. When the switch 12 is in the OFF-state, a voltage across the switch 12 is substantially equal to the output voltage. Therefore, if the switch 12 is implemented as a MOSFET device, a relatively large conducting impedance is exhibited by the MOSFET device, thereby resulting in a relatively large conduction loss.
2. When the switch 12 is switched from the OFF-state to the ON-state, a reverse bias surge current is generated to flow through the switch 12 that causes serious switching loss, thereby reducing power transformation efficiency.
3. The conventional boost device has a relatively small boost ratio due to the presence of the inductor 11. Therefore, an input voltage converted from solar energy or supplied by a rechargeable battery set of a motor-driven vehicle is not suitably boosted by the conventional boost device.

Referring to Figure 2, another conventional boost device is shown to include a coupling inductor 15, a switch 16, a diode 17, and an output capacitor 18. The coupling inductor 15 has first and second windings 151, 152, each of which has a polarity end and a non- polarity end. The polarity end of the first winding 151 is coupled to an external power source. The switch 16 has a first terminal coupled to a common node between the non-polarity end of the first winding 151 and the polarity end of the second winding 152, a second terminal coupled to ground, and a control terminal for receiving an external control signal such that the switch 16 is operable between an ON-state and an OFF-state in response to the external control signal. The diode 17 has an anode coupled to the non-polarity of the second winding 152, and a cathode. The capacitor 18 is coupled between the cathode of the diode 17 and ground.

When the switch 16 is operated in the ON-state, a current from the external power source flows through the first winding 151 such that the first winding 151 is excited to store electric power. When the switch 16 is operated in the OFF-state, energy stored in the coupling inductor 15 charges the output capacitor 18 through the second winding 152 and the diode 17 such that the conventional boost device outputs an output voltage, i.e., a voltage across the output capacitor 18, to a load.

The following are some of the drawbacks of the conventional boost device of Figure 2:
1. When the switch 16 is switched from the ON-state to the OFF-state, a voltage is generated as a result of a leakage inductance of the coupling inductor 15 and can cause damage to the switch 16. As such, anadditional snubber circuit is required to absorb energy attributed to the leakage inductance.
2. When the switch 16 is switched from the OFF-state to the ON-state, a relatively large current flows through the switch 16, thereby resulting in a relatively large conduction loss. As a result, the power transformation efficiency of the conventional boost device is reduced.
3. A boost ratio of the conventional boost device is limited to a winding ratio of the second and first windings 152, 151. Therefore, an input voltage converted from solar energy is not suitably boosted by for the conventional boost device.

US-A-4 384 321 and US 2005/185432 disclose a boost chopper regulator and a pre-regulator respectively.

US-A-4 384 321 discloses a boost device for boosting an input voltage supplied by an external power source to an output voltage, comprising:
a transformer having first and third windings each having a polarity end and a non-polarity end, the polarity end of the first winding being adapted to be coupled to the external power source and being coupled to the non-polarity end of the third winding,
an output capacitor having a first terminal and a grounded second terminal, the output voltage being a voltage across the output capacitor;
a first output diode having an anode coupled to the transformer, and a cathode coupled to the first terminal of the output capacitor;
a second output diode having an anode coupled to the transformer, and a cathode coupled to the first terminal of the output capacitor;
a first switch coupled between ground and the non-polarity end of the first winding;
a second switch coupled between ground and the polarity end of the third winding;
each of the first and second switches being operable to switch between an ON-state and an OFF-state, the first and second switches being operated alternately in the ON-state, duration of the ON-state of one of the first and second switches overlapping duration of the ON-state of the other one of the first and second switches.

An object of the present invention is to provide a boost device that has relatively high boost ratio and power transformation efficiency and that can overcome the aforesaid drawbacks of the prior art.

According to the present invention, there is provided a boost device as set out in Claim 1.

Preferred features of the invention are set out in Claims 2 to 7.

Other features and advantages of the present invention will become apparent in the following detailed description of the preferred embodiment with reference to the accompanying drawings, of which:
Figure 1 is a schematic electrical circuit diagram illustrating a conventional boost device;
Figure 2 is a schematic electrical circuit diagram illustrating another conventional boost device;
Figure 3 is a schematic electrical circuit diagram illustrating the preferred embodiment of a boost device according to the present invention;
Figures 4a and 4b illustrate waveforms of first and second control signals (V_{g1}, V_{g2}) for first and second switches of the preferred embodiment, respectively;
Figure 4c illustrates a waveform of an exciting current (i_{LM}) of a transformer of the preferred embodiment;
Figure 4d illustrates waveforms of currents (i_{L1}, i_{L2}) flowing respectively through first and second windings of the transformer of the preferred embodiment;
Figure 4e illustrates waveforms of currents (i_{L3}, i_{L4}) flowing respectively through third and fourth windings of the transformer of the preferred embodiment;
Figure 4f illustrates waveforms of a current (i_{Q1}) flowing through a first switch of the preferred embodiment, and a voltage (v_{Q1}) across the first switch;
Figure 4g illustrates waveforms of a current (i_{Q2}) flowing through a second switch of the preferred embodiment, and a voltage (v_{Q2}) across the second switch;
Figure 5 is a schematic equivalent electrical circuit diagram illustrating the preferred embodiment when operated in a first mode;
Figure 6 is a schematic equivalent electrical circuit diagram illustrating the preferred embodiment when operated in a second mode;
Figure 7 is a schematic equivalent electrical circuit diagram illustrating the preferred embodiment when operated in a third mode;
Figure 8 is a schematic equivalent electrical circuit diagram illustrating the preferred embodiment when operated in a fourth mode;
Figure 9 is a schematic equivalent electrical circuit diagram illustrating the preferred embodiment when operated in a fifth mode;
Figure 10 is a schematic equivalent electrical circuit diagram illustrating the preferred embodiment when operated in a sixth mode;
Figure 11 is a plot illustrating experimental measurement results of the current (i_{Q1}) flowing though the first switch and the voltage (v_{Q1}) across the first switch;
Figure 12 is a plot illustrating experimental measurement results of the voltages (v_{Q1}, v_{Q2}) across the first and second switches;
Figure 13 is a plot illustrating experimental measurement results of the currents (i_{L1}, i_{L2}) flowing respectively through first and second windings of the transformer;
Figure 14 is a plot illustrating experimental measurement results of a voltage (v_{D2}) across a first charge diode of the preferred embodiment, and a current (i_{D2}) flowing through the first charge diode;
Figure 15 is a plot illustrating experimental measurement results of a voltage (v_{D3}) across a first output diode of the preferred embodiment, and a current (i_{D3}) flowing through the first output diode;
Figure 16 is a plot illustrating experimental measurement results of the voltages (v_{D2}, v_{D3}) across the first charge diode and the first output diode;
Figure 17 is a plot illustrating experimental measurement results of a voltage (v_{C3}) across a first boost capacitor of the preferred embodiment, and a current (i_{C3}) flowing through the first boost capacitor;
Figure 18 is a plot illustrating experimental measurement results of a current (i_{D6}) flowing through a second output diode of the preferred embodiment, and the current (i_{D3}) flowing through the first output diode;
Figure 19 is a plot illustrating experimental measurement results of an input voltage (V_{IN}), an output voltage (V_{H}) boosted by the preferred embodiment, and a current (I_{O} flowing through a variable load; and
Figure 20 is a plot illustrating experimental results of power transformation efficiency of the preferred embodiment for three different input voltages.

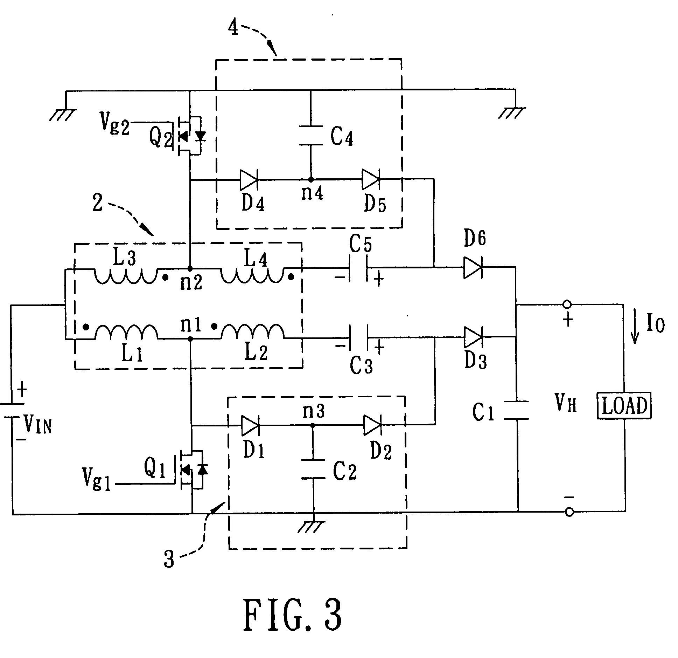

Referring to Figure 3, the preferred embodiment of a boost device according to the present invention is shown to be adapted for boosting an input voltage (V_{IN}) supplied by an external source to an output voltage (V_{H}). The boost device includes a transformer 2, a first switch (Q1), a second switch (Q2), an output capacitor (C1), a first switching circuit 3, a second switching circuit 4, a first boost capacitor (C3),a second boost capacitor (C5), a first output diode (D3), and a second output diode (D6).

The transformer 2 includes first, second, third and fourth windings (L₁, L₂, L₃, L₄) wound around an iron core (not shown). A winding ratio of the first, second, third and fourth windings (L₁, L₂, L₃, L₄) is equal to 1: N: 1: N. Each of the first, second, third and fourth windings (L₁, L₂, L₃, L₄) has a polarity end and a non-polarity end. The polarity end of the first winding (L₁) is adapted to be coupled to the external power source, and is coupled to the non-polarity end of the third winding (L₃). The non-polarity end of the first winding (L₁) is coupled to the polarity end of the second winding (L₂). The polarity end of the third winding (L₃) is coupled to the non-polarity end of the fourth winding (L₄).

The output capacitor (C₁) is adapted to be coupled to a load in parallel, and has a first terminal and a grounded second terminal. The output voltage is a voltage across the output capacitor (C₁).

The first output diode (D₃) has a cathode coupled to the first terminal of the output capacitor (C₁), and an anode.

The second output diode (D₆) has a cathode coupled to the first terminal of the output capacitor (C₁), and an anode.

The first boost capacitor (C₃) is coupled between the non-polarity end of the second winding (L₂) and the anode of the first output diode (D₃).

The second boost capacitor (C₅) is coupled between the polarity end of the fourth winding (L₄) and the anode of the second output diode (D₆).

The first switch (Q₁) is coupled between ground and a first common node (n1) between the non-polarity end of the first winding (L₁) and the polarity end of the second winding (L₂), and has a control end for receiving an external control signal (V_{g1}). The first switch (Q₁) is operable to switch between an ON-state and an OFF-state in response to the external control signal (V_{g1}).

The second switch (Q₂) is coupled between ground and a second common node (n2) between the polarity end of the third winding (L₃) and the non-polarity end of the fourth winding (L₄), and has a control end for receiving an external control signal (V_{g2}). The second switch (Q₂) is operable to switch between an ON-state and an OFF-state in response to the external control signal (V_{g2}).

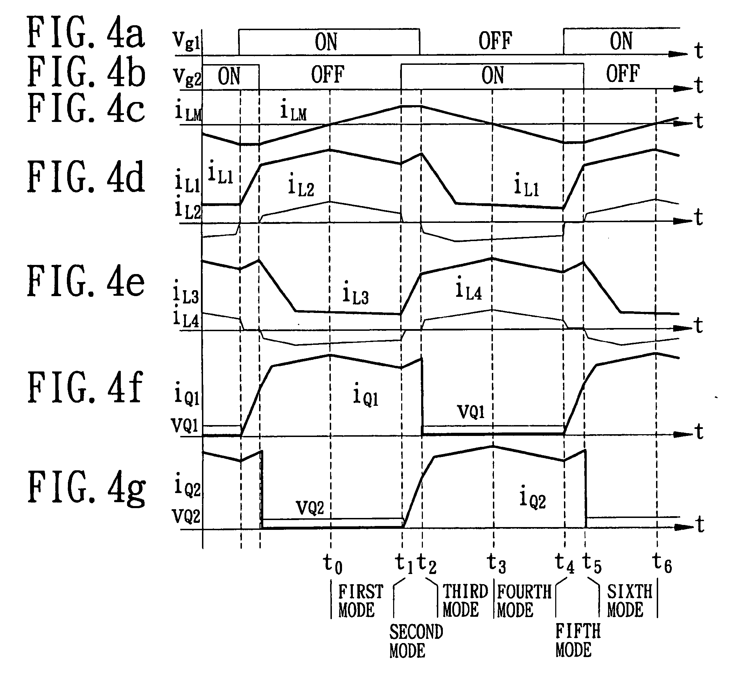

It is noted that, based on the external control signals (V_{g1}, Vg₂) shown in Figures 4a and 4b, the first and second switches (Q₁, Q₂) are operated alternately in the ON-state, and duration of the ON-state of one of the first and second switches (Q₁, Q₂) overlaps duration of the ON-state of the other one of the first and second switches (Q₁, Q₂). Hence, the duty cycle of a combination of the first and second switches (Q₁, Q₂) is over 100%. In this embodiment, the first and second switches (Q₁, Q₂) have the same duty cycle, such as 60%.

The first switching circuit 3 is coupled among the first common node (n1), the anode of the first output diode (D₃), and ground. In this embodiment, the first switching circuit 3 includes a first clamp diode (D₁), a first charge diode (D₂), and a first clamp capacitor (C₂). The first clamp diode (D₁) has an anode coupled to the first common node (n1), and a cathode. The first charge diode (D₂) has an anode coupled to the cathode of the first clamp diode (D₁), and a cathode coupled to the anode of the first output diode (D₃). The first clamp capacitor (C₂) is coupled between a third common node (n3) between the cathode of the first clamp diode (D₁) and the anode of the first charge diode (D₂), and ground.

The second switching circuit 4 is coupled among the second common node (n2), the anode of the second output diode (D₆), and ground. In this embodiment, the second switching circuit 4 includes a second clamp diode (D₄), a second charge diode (D₅), and a second clamp capacitor (C₄). The second clamp diode (D₄) has an anode coupled to the second common node (n2), and a cathode. The second charge diode (D₅) has an anode coupled to the cathode of the second clamp diode (D₄), and a cathode coupled to the anode of the second output diode (D₆). The second clamp capacitor (C₄) is coupled between a fourth common node (n4) between the cathode of the second clamp diode (D₄) and the anode of the second charge diode (D₅), and ground.

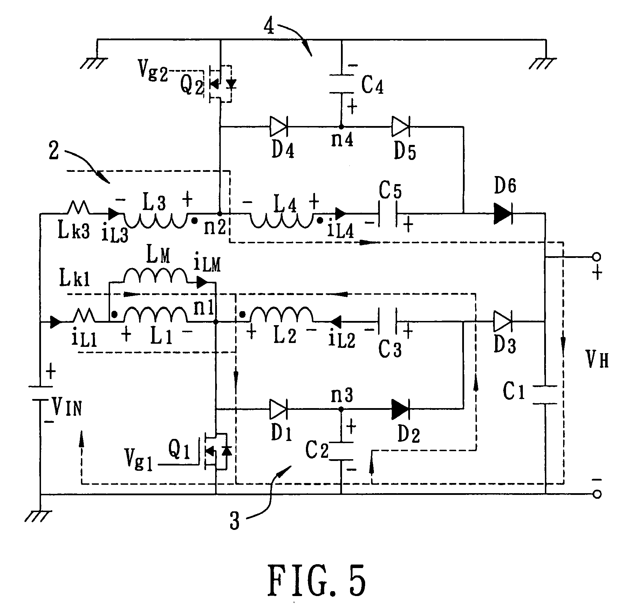

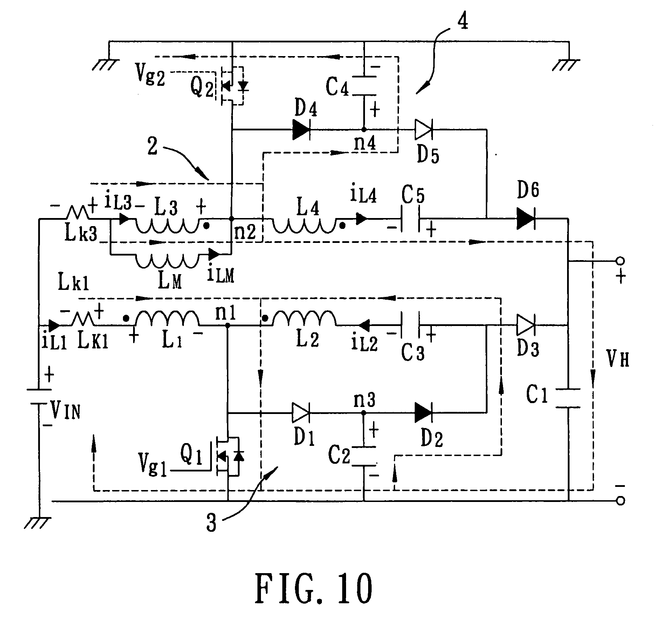

When the first switch (Q₁) is in the ON-state and the second switch (Q₂) is in the OFF-state, the first switching circuit 3 is operable to establish a ground path for the anode of the first output diode (D₃) therethrough, and the second switching circuit 4 is operable to disconnect the anode of the second output diode (D₆) from the second common node (n2) and ground, as best shown in Figures 5 and 10.

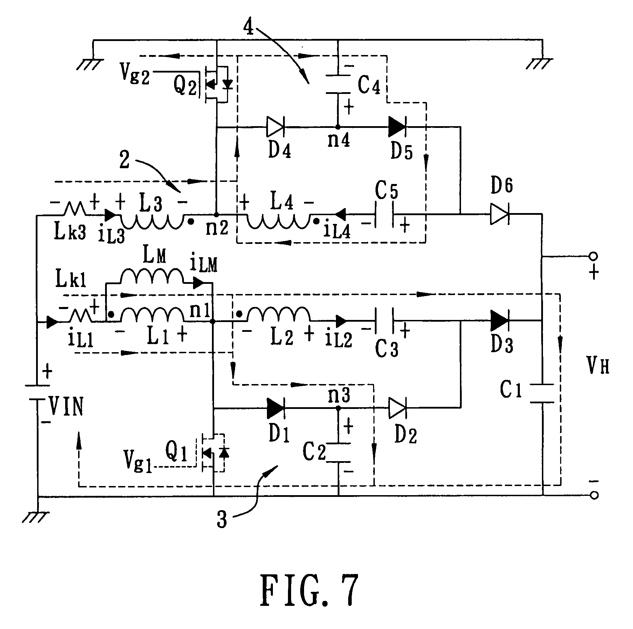

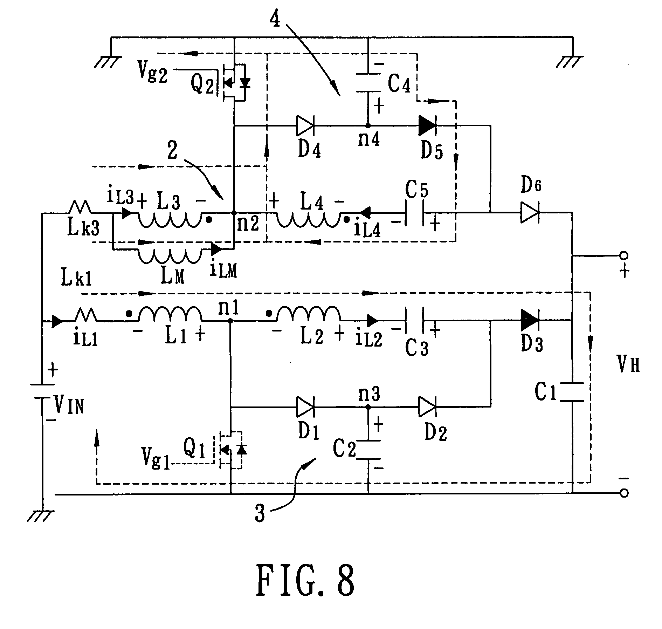

When the first switch (Q₁) is in the OFF-state and the second switch (Q₂) is in the ON-state, the second switching circuit 4 is operable to establish a ground path for the anode of the second output diode (D₆) therethrough, and the first switching circuit 3 is operable to disconnect the anode of the first output diode (D₃) from the first common node (n1) and ground, as best shown in Figures 7 and 8.

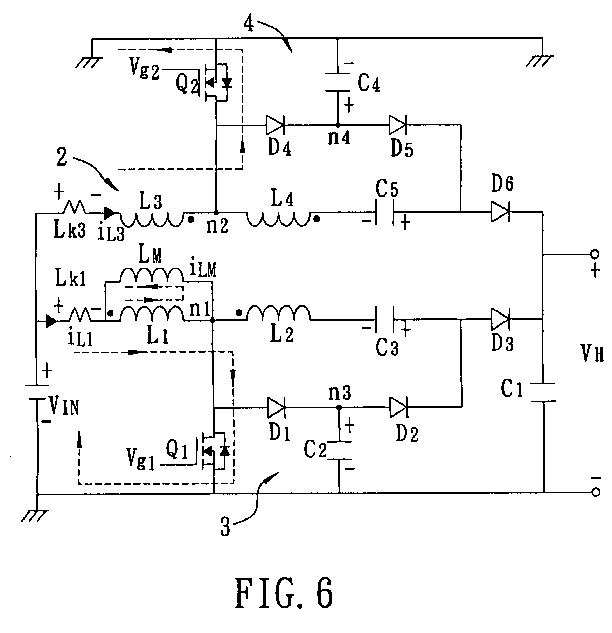

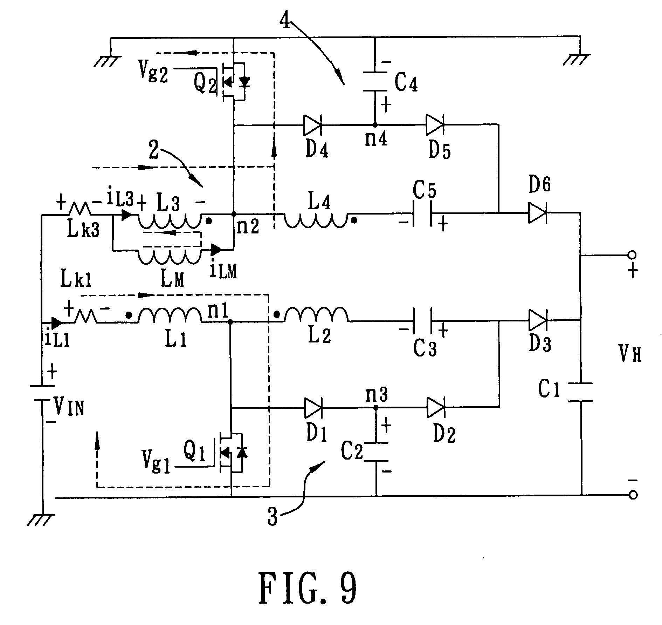

When the first and second switches (Q₁, Q₂) are in the ON-state, the first switching circuit 3 is operable to disconnect the anode of the first output diode (D₃) from the first common node (n1) and ground, and the second switching circuit 4 is operable to disconnect the anode of the second output diode (D₆) from the second common node (N2) and ground, as best shown in Figures 6 and 9.

The boost device of the preferred embodiment is operable among first to sixth modes based on the external control signals (V_{g1}, V_{g2}) for the first and second switches (Q₁, Q₂) shown in Figures 4a and 4b. Figure 4c illustrates a waveform of an exciting current (i_{LM}) of the transformer 2. Figure 4d illustrates waveforms of currents (i_{L1}, i_{L2}) flowing respectively through the first and second windings (L₁, L₂). Figure 4e illustrates waveforms of currents (i_{L3}, i_{L4}) flowing respectively through the third and fourth windings (L₃, L₄). Figure 4f illustrates waveforms of a current (i_{Q1}) flowing through the first switch (Q₁), and a voltage (v_{Q1}) across the first switch (Q₁). Figure 4g illustrates waveforms of a current (i_{Q2}) flowing through the second switch (Q₂), and a voltage (v_{Q2}) across the second switch (Q₂).

Referring further to Figures 4a to 4g, and 5, the boost device is operated in the first mode during a period from t₀ to t₁. In Figure 5, L_{M} represents an exciting inductance of the transformer 2, Lₖ₁ represents a leakage inductance of the first winding (L₁), and Lₖ₃ represents a leakage inductance of the third winding (L₃). In the first mode, the first switch (Q₁) is in the ON-state and the second switch (Q₂) is in the OFF-state. The first winding (L₁) is excited by a current from the external power source to generate an induced voltage equal to V_{IN} across the first winding (L₁). Thus, induced voltages across the second, third and fourth windings (L₂, L₃, L₄) are equal to NV_{IN}, V_{IN} and NV_{IN}, respectively. In this case, the second winding (L₂), the first switch (Q₁), the first clamp capacitor (C₂) and the first charge diode (D₂) of the first switching circuit 3, and the first boost capacitor (C₃) form a circuit loop such that the first boost capacitor (C₃) is charged through the first charge diode (D₂) with the induced voltage across the second winding (L₂), and a voltage across the first clamp capacitor (C₂) (that is equal to 2V_{IN} which will be described in detail later) to NV_{IN} + 2V_{IN}. Furthermore, since the first and second switches (Q₂, Q₂) have the same duty cycle, and since an assembly of the first and second windings (L₁, L₂), the first switch (Q₁), the first switching circuit 3, the first boost capacitor (C₃), and the first output diode (D₃) is symmetrical to an assembly of the third and fourth windings (L₃, L₄), the second switch (Q₂), the second switching circuit 4, the second boost capacitor (C₅), and the second output diode (D₆), a voltage across the second boost capacitor (C₅) corresponds to the voltage across the first boost capacitor (C₃), and is equal to NV_{IN} + 2V_{IN} that will be described in detail later. Thus, the output capacitor (C₁) is charged through the second output diode (D₆) with the input voltage (V_{IN}), the induced voltage across the third winding (L₃), the induced voltage across the fourth winding (L₄) and the voltage across the second boost capacitor (C₅) to V_{IN} + V_{IN} + NV_{IN} + (NV_{IN}+2V_{IN}) = (4+2N)V_{IN}. That is, the output voltage (V_{H}) is equal to (4+2N) V_{IN}. Thus, a boost ratio (G) of the boost device is represented by V_{H}/V_{IN} = 4+2N.

Referring to Figure 6, the boost device is operated in the second mode during a period from t₁ to t₂- In the second mode, the first and second switches (Q₁, Q₂) are in the ON-state. In this case, the potential of the second common node (n2) is reduced to zero such that a voltage across the leakage inductance (Lₖ₃) of the third winding (L₃) becomes a sum of the input voltage (V_{IN}) and the induced voltage across the third winding (L₃). Thus, the current (i_{L3}) flowing through the third winding (L₃) increases at a slope of 2V_{IN}/Lₖ₃, as shown in Figure 4e. Since the leakage inductance (Lₖ₃) of the third winding (L₃) is much less than the exciting inductance (L_{M}), the leakage inductance (Lₖ₃) of the third winding (L₃) is charged with the increased current (Lₓ₃). Energy induced by the first winding (L₁) is transformed to the third winding (L₃) due to conduction of the first switch (Q₁) such that the current (i_{L1}) flowing through the first winding (L₁) slightly increases. The currents (i_{L2}, i_{L4}) flowing through the second and fourth windings (L₂, L₄) are reduced to zero.

Referring to Figure 7, the boost device is operated in the third mode during a period from t₂ to t₃. In the third mode, the first switch (Q₁) is in the OFF-state and the second switch (Q₂) is in the ON-state. When the first switch (Q₁) is switched from the ON-state to the OFF-state while the second switch (Q₂) is in the ON-state, the first switching circuit 3 is operable to establish the ground path for the first common node (n1) through the first clamp diode (D₁) and the first clamp capacitor (C₂), and potential of the first common node (n1) quickly rises such that a voltage across the leakage inductance (Lₖ₁) of the first winding (L₁) greatly increases up to V_{IN}. Thus, the first winding (L₁) and the first clamp capacitor (C₂) are charged with the input voltage (V_{IN}) and the voltage across the leakage inductance (Lₖ₁) of the first winding (L₁), and the voltage (V_{C2}) across the first clamp capacitor (C₂) is charged to 2V_{IN}. In this case, the first clamp capacitor (C₂) receives energy attributed to the leakage inductance (Lₖ₁) of the first winding (L₁). A voltage (v_{Q1}) across the first switch (Q₁) is equal to the voltage (V_{C2}) across the first clamp capacitor (C₂) and is clamped to 2V_{IN} (=V_{H}/(2+N)). Furthermore, the fourth winding (L₄), the second switch (Q₂), the second clamp capacitor (C₄) and the second charge diode (D₅) of the second switching circuit 4, and the second boost capacitor (C₅) form a circuit loop such that the second boost capacitor (C₅) is charged through the second charge diode (D₅) with the induced voltage across the fourth winding (L₄) and the voltage across the second clamp capacitor (C₄). Furthermore, the output capacitor (C₁) is charged through the first charge diode (D₃) with the induced voltages across the first and second windings (L₁, L₂), and the voltage across the first boost capacitor (C₃).

Referring to Figure 8, the boost device is operated in the fourth mode during a period from t₃ to t₄- In the fourthmode, the first switch (Q₁) is in the OFF-state and the second switch (Q₂) is in the ON-state. When the exciting current (i_{LM}) of the transformer 2 is reduced to zero, the boost device is switched from the third mode to the fourth node. In this case, the energy attributed to the leakage inductance (Lₖ₁) of the first winding (L₁) is released, and the exciting current (i_{LM)} of the transformer 2 is reversed. Thus, the first clamp diode (D₁) does not conduct due to reverse bias. Furthermore, the second boost capacitor (C₅) is continuously charged with the induced voltage across the fourth winding (L₄) (equal to NV_{IN}) and a voltage across the second clamp capacitor (C₄) to NV_{IN} + 2V_{IN}. The output capacitor (C₁) is charged through the first charge diode (D₃) with the induced voltages across the first and second windings (L₁, L₂), and the voltage across the first boost capacitor (C₃).

Referring to Figure 9, the boost device is operated in the fifth mode during a period from t₄ to t₅. In the fifth mode, the first and second switches (Q₁, Q₂) are in the ON-state. Since operations of the boost device in the fifth mode are similar to those in the second mode, details of the same are omitted herein for the sake of brevity.

Referring to Figure 10, the boost device is operated in the sixth mode during a period from t₅ to t₆. In the sixth mode, the first switch (Q₁) is in the ON-state and the second switch (Q₂) is in the OFF-state. When the second switch (Q₂) is switched from the ON-state to the OFF-state while the first switch (Q₁) is in the ON-state, the second switching circuit 4 is operable to establish the ground path for the second common node (n2) through the second clamp diode (D₄) and the second clamp capacitor (C₄), and potential of the second common node (n2) quickly rises such that a voltage across the leakage inductance (Lₖ₃) of the third winding (L₃) greatly increases up to V_{IN}. Thus, the third winding (L₃) and the second clamp capacitor (C₄) are charged with the input voltage (V_{IN}) and the voltage across the leakage inductance (Lₖ₃) of the third winding (L₃), and the voltage (V_{C4}) across the second clamp capacitor (C₄) is charged to 2V_{IN}. In this case, the second clamp capacitor (C₄) receives energy attributed to the leakage inductance (Lₖ₃) of the third winding (L₃). A voltage (V_{Q2}) across the second switch (Q₂) is equal to the voltage (V_{C4}) across the second clamp capacitor (C₄) and is clamped to 2V_{IN}. Furthermore, the second winding (L₂), the first switch (Q₁), the first clamp capacitor (C₂) and the first charge diode (D₂) of the first switching circuit 3, and the first boost capacitor (C₃) form a circuit loop such that the first boost capacitor (C₃) is charged through the first charge diode (D₂) with the induced voltage across the second winding (L₂) and the voltage across the first clamp capacitor (C₂). Furthermore, the output capacitor (C₁) is charged through the second charge diode (D₆) with the induced voltages across the third and fourth windings (L₃, L₄), and the voltage across the second boost capacitor (C₅). Thereafter, when the exciting current (i_{LM}) of the transformer 2 becomes zero, the boost device is switched from the sixth mode to the first node.

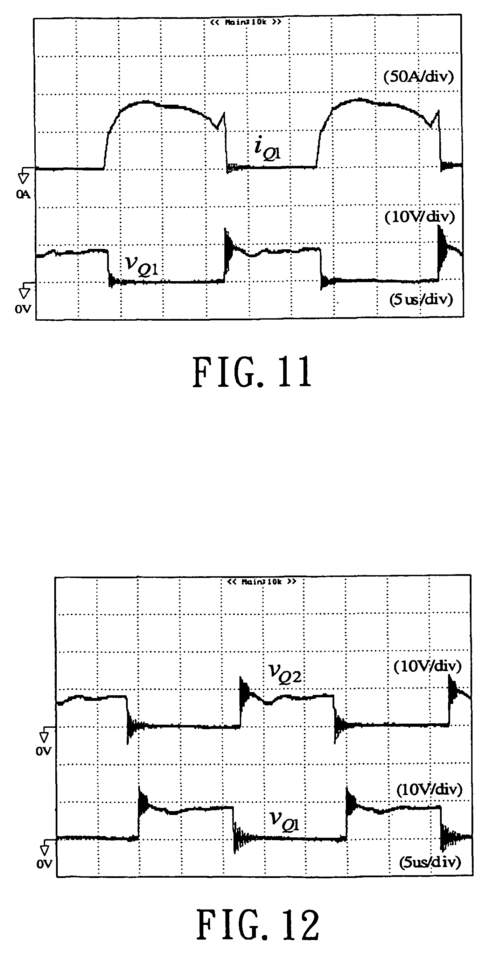

Figures 11 to 18 illustrate experimental measurement results when the boost device of the preferred embodiment is operated under the input voltage (V_{IN}) of 3. 7V, the output voltage (V_{H}) of 36V and an output power of 300W.

As shown in Figure 11, the voltage (V_{Q1}) across the first switch (Q₁) is clamped to about 8V, i.e., about double the input voltage (V_{IN}). The waveform of the current (i_{Q1}) flowing through the first switch (Q₁) is substantially of a square shape. The first switch (V_{IN}) has soft switch characteristics during transformation from the OFF-state to the ON-state. Therefore, the switching loss and conduction loss for the first switch (Q₁) are effectively reduced.

As shown in Figure 12, when the voltages (V_{Q1}, _{VQ2}) across the first and second switches (Q₁, Q₂) are zero, the first and second switches (Q₁, Q₂) are in the ON-state.

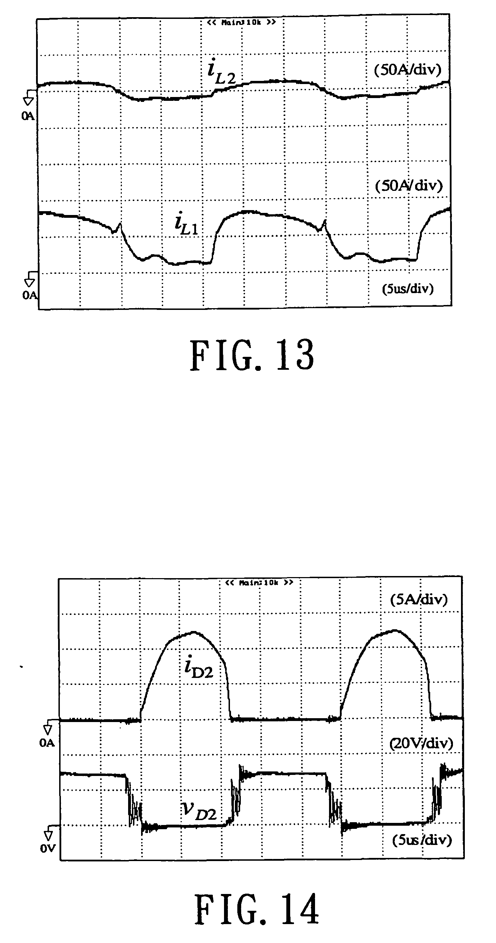

As shown in Figure 13, since the current (i_{L1}) flowing through the first winding (L₁) contains current components resulting in the currents flowing through the third and fourth windings (L₃, L₄), the current (i_{L1}) flowing through the first winding (L₁) is much greater than N times the current (i_{L2}) flowing through the second winding (L₂). In this experiment, the boost ratio is about 10(= 4+2N), and thus, N is equal to 3.

As shown in Figure 14, a voltage (v_{D2}) across the first charge diode (D₂) is clamped to about 30V. Thus, a Schottky diode having a low-conducting voltage can be used.

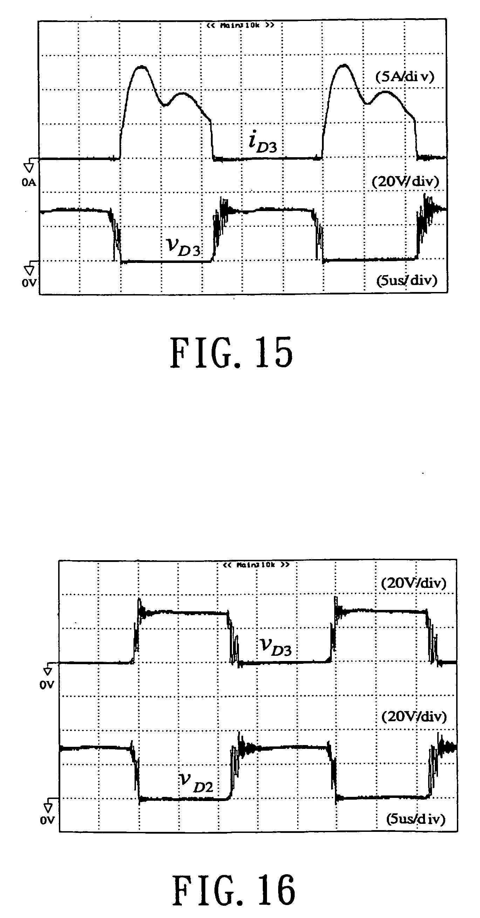

As shown in Figure 15, a voltage (v_{D3}) across the first output diode (D₃) is clamped to about 30V, and a reverse recovery current is suppressed within a very small region.

As shown in Figure 16, the voltages (v_{D2}, v_{D3}) across the first charge diode (D₂) and the first output diode (D₃) are alternately clamped to about 30V that is less than the output voltage (V_{H}) of 36V.

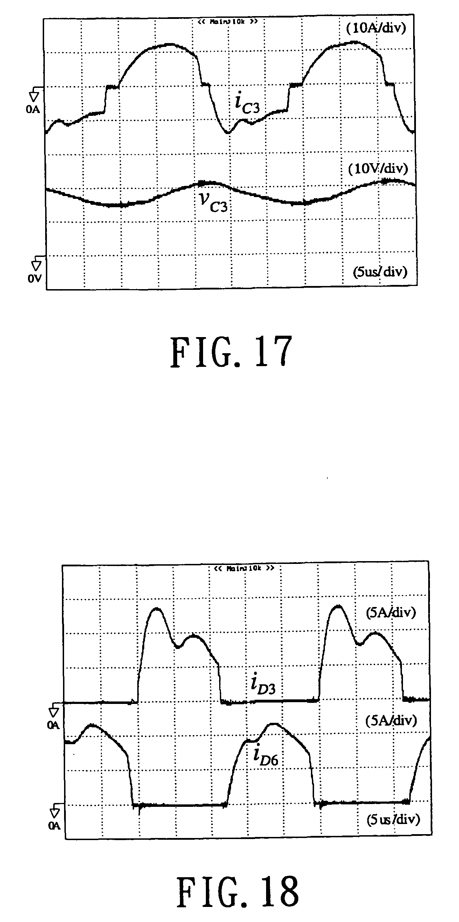

As shown in Figure 17, in order to suppress an inrush current, each of the first and second boost capacitors (C₃, C₅) are designed to have a relatively low equivalent series resistance (ESR) and a relatively small capacitance. Thus, the voltage across the first boost capacitor (C₃) has a large ripple, thereby decreasing heat generated by the first boost capacitor (C₃).

As shown in Figure 18, current (i_{D3}, i_{D6}) flowing through the first and second output diodes (D₃, D₆) are alternately outputted by the boost device, and a combination of the current (i_{D3}) flowing through the first output diode (D₃) and the current (i_{D5}) flowing through the second output diode (D₅) serves as an output current of the boost device.

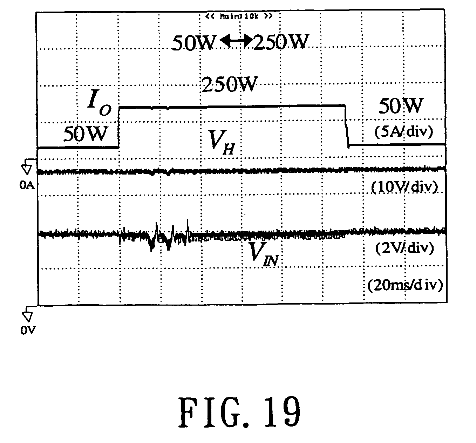

Referring to Figure 19, the boost device is adapted to be coupled to a variable load so that the output power of the boost device is variable between 50W and 250W. In this case, when the input voltage (V_{IN}) slightly fluctuates, the output voltage (V_{H}) remains stable even though great variation of the output power occurs.

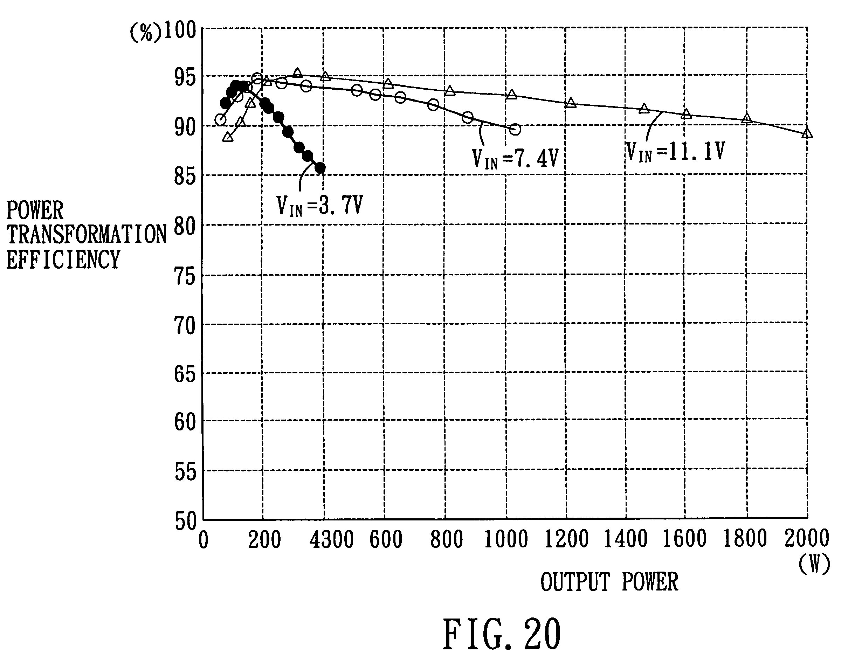

Figure 20 illustrates experimental results of power transformation efficiency of the boost device of the preferred embodiment operated under first, second and third conditions, where the input voltage (V_{IN}) and the output voltage (V_{H}) are respectively 3.7V and 36V in the first condition, the input voltage (V_{IN}) and the output voltage (V_{H}) are respectively 7.4V and 75V in the second condition, and the input voltage (V_{IN}) and the output voltage (V_{H}) are respectively 11.1V and 110V in the third condition. In Figure 20, when the input voltage (V_{IN}) is 7.4V or 11.1V while the output power ranges from 0.9KW to 1.8KW, the power transformation efficiency is over 90%. When the input voltage (V_{IN}) is 11.1V, the boost device has a maximum output power of 2KW, and a maximum power transformation efficiency of about 95%.

In sum, due to the presence of the first and second switches (Q₁, Q₂), and the first and second switching circuits 3 and 4, the boost device of this invention has relatively low conduction loss and switching loss. Since the first and second switches (Q₁, Q₂) are clamped to 2V_{IN} that is less than the output voltage (V_{H}) equal to (4+2N)V_{IN}, a MOSFET switch having a low conducting voltage and a low conduction loss can be used for the first and second switches (Q₁, Q₂), and there is no need for a snubber circuit, thereby resulting in a relatively low cost. Moreover, the boost device of this invention has a relatively larger boost ratio equal to 4+2N. Therefore, the boost device of this invention can be applied with a solar cell or a rechargeable battery set of a motor-driven vehicle.

## Claims

1. A boost device for boosting an input voltage (V_{IN}) supplied by an external power source to an output voltage (V_{H}), comprising:
a transformer (2) having first, second, third and fourth windings (L₁, L₂, L₃, L₄) wound around an iron core and each having a polarity end and a non-polarity end, a winding ratio of the first, second, third and fourth windings (L₁, L₂, L₃, L₄) bring equal to 1 : N : 1 : N, said polarity end of said first winding (L₁) being adapted to be coupled to the external power source and being coupled to said non-polarity end of said third winding (L₃), said non-polarity end of said first winding (L₁) being coupled to said polarity end of said second winding (L₂), said polarity end of said third winding (L₃) being coupled to said non-polarity end of said fourth winding (L₄);
an output capacitor (C₁) having a first terminal and a grounded second terminal, the output voltage (V_{H}) being a voltage across said output capacitor (C₁);
a first output diode (D₃) having an anode, and a cathode coupled to said first terminal of said output capacitor (C₁);
a second output diode (D₆) having an anode, and a cathode coupled to said first terminal of said output capacitor (C₁) ;
a first switch (Q₁) coupled between ground and a first common node (n₁) between said non-polarity end of said first winding (L₁) and said polarity end of said second winding (L₂);
a second switch (Q₂) coupled between ground and a second common node (n₂) between said polarity end of said third winding (L₃) and said non-polarity end of said fourth winding (L₄);
each of said first and second switches (Q_{1,} Q₂) being operable to switch between an ON-state and an OFF-state, said first and second switches (Q₁, Q₂) being operated alternately in the ON-state, duration of the ON-state of one of said first and second switches (Q₁, Q₂) overlapping duration of the ON-state of the other one of said first and second switches (Q_{1,} Q₂);
a first boost capacitor (C₃) coupled between said non-polarity end of said second winding (L₂) and said anode of said first output diode (D₃);
a second boost capacitor (C₅) coupled between said polarity end of said fourth winding (L₄) and said anode of said second output diode (D₆);
a first switching circuit (3) including
a first clamp diode (D₁) having an anode coupled to said first common node (n₁), and a cathode,
a first charge diode (D₂) having an anode coupled to said cathode of said first clamp diode (D₁), and a cathode coupled to said anode of said first output diode (D₃), and
a first clamp capacitor (C₂) coupled between a third common node (n₃) between said cathode of said first clamp diode (D₁) and said anode of said first charge diode (D₂), and ground; and
a second switching circuit (4) including
a second clamp diode (D₄) having an anode coupled to said second common node (n₂), and a cathode,
a second charge diode (D₅) having an anode coupled to said cathode of said second clamp diode (D₄), and a cathode coupled to said anode of said second output diode (D₆), and
a second clamp capacitor (C₄) coupled between a fourth common node (n₄) between said cathode of said second clamp diode (D₄) and said anode of said second charge diode (D₅), and ground;
wherein, when said first switch (Q₁) is in the ON-state and said second switch (Q₂) is in the OFF-state, said first switching circuit (3) is operable to establish a ground path for said anode of said first output diode (D₃) through said first charge diode (D₂) and said first clamp capacitor (C₂), and said second switching circuit (4) is operable to disconnect said anode of said second output diode (D₂) from ground such that said output capacitor (C₁) is charged through said second output diode (D₆) with the input voltage (V_{IN}), an induced voltage across said third winding (L₃), an induced voltage across said fourth winding (L₄) and a voltage across said second boost capacitor (C₅); and
wherein, when said first switch (Q₁) is in the OFF-state and said second switch (Q₂) is in the ON-state, said second switching circuit (4) is operable to establish a ground path for said anode of said second output diode (D₆) through said second charge diode (D₅) and said second clamp capacitor (C₄), and said first switching circuit (3) is operable to disconnect said anode of said first output diode (D₃) from ground such that said output capacitor (C₁) is charged through said first output diode (D₃) with the input voltage (V_{IN}), an induced voltage across said first winding (L₁), an induced voltage across said second winding (L₂) and a voltage across said first boost capacitor (C₃).

2. The boost device as claimed in Claim 1, wherein, when said first switch (Q₁) is switched from the ON-state to the OFF-state while said second switch (Q₂) is in the ON-state, said first switching circuit (3) is operable to establish a ground path for said first common node (n₁) through said first clamp diode (D₁) and said first clamp capacitor (C₂) to clamp a voltage across said first switch (Q₁).

3. The boost device as claimed in claim 2, wherein said first switching circuit (3) further receives energy attributed to a leakage inductance (Lₖ₁) of said first winding (L₁).

4. The boost device as claimed in Claim 1, wherein, when said second switch (Q₂) is switched from the ON-state to the OFF-state while said first switch (Q₁) is in the ON-state, said second switching circuit (4) is operable to establish a ground path for said second common node (n₂) through said second clamp diode (D₄) and_said second clamp capacitor (C₄) to clamp a voltage across said second switch (Q₂).

5. The boost device as claimed in Claim 4, wherein said second switching circuit (4) further receives energy attributed to a leakage inductance (Lₖ₃) of said third winding (L₃).

6. The boost device as claimed in Claim 1, wherein:
when said first switch (Q₁) is in the ON-state and said second switch (Q₂) is in the OFF-state, said second winding (L₂), said first switch (Q₁), said first clamp capacitor (C₂) and said first charge diode (D₂) of said first switching circuit (3), and said first boost capacitor (C₃) form a circuit loop such that said first boost capacitor (C₃) is charged with an induced voltage across said second winding (L₂) and a voltage across said first clamp capacitor (C₂); and
when said first switch (Q₁) is in the OFF-state and said second switch (Q₂) is in the ON-state, said fourth winding (L₄), said second switch (Q₂), said second clamp capacitor (C₄) and said second charge diode (D₅) of said second switching circuit (4), and said second boost capacitor (C₅) form a circuit loop such that said second boost capacitor (C₅) is charged with an induced voltage across said fourth winding (L₄) and a voltage across said second clamp capacitor (C4).

7. The boost device as claimed in Claim 1, wherein said first and second switches (Q₁, Q₂) have the same duty cycle.

## Patentansprüche

1. Erhöhungsvorrichtung zum Erhöhen einer Eingangsspannung (V_{IN)}, die von einer externen Stromquelle zugeführt wird, zu einer Ausgangsspannung (V_{H}), umfassend
einen Umwandler (2) mit ersten, zweiten, dritten und vierten Wicklungen (L₁, L₂, L₃, L₄), die um einen Eisenkern gewickelt sind und jeweils ein Polaritätsende und ein Nichtpolaritätsende aufweisen, ein Wicklungsverhältnis der ersten, zweiten, dritten und vierten Wicklung (L₁, L₂, L₃, L₄) ergeben 1 : N : 1 : N, wobei das Polaritätsende der ersten Wicklung (L₁) ausgelegt ist, um mit der externen Energiequelle gekoppelt zu sein und mit dem Nichtpolaritätsende der dritten Wicklung (L₃) gekoppelt zu sein, wobei das Nichtpolaritätsende der ersten Wicklung (L₁) ausgelegt ist, um mit dem Polaritätsende der zweiten Wicklung (L₂) gekoppelt zu sein, wobei das Polaritätsende der dritten Wicklung (L₃) mit dem Nichtpolaritätsende der vierten Wicklung (L₄) gekoppelt ist;
einem Ausgangskondensator (C₁) mit einem ersten Anschluss und einem geerdeten zweiten Anschluss, wobei die Ausgangsspannung (V_{H}) eine Spannung auf dem gesamten Ausgangskondensator (C₁) ist;
eine erste Ausgangsdiode (D₃) mit einer Anode, und eine Kathode, die mit dem ersten Anschluss des Ausgangskondensators (C₁) gekoppelt ist;
eine zweite Ausgangsdiode (D₆) mit einer Anode, und eine Kathode, die mit dem ersten Anschluss des Ausgangskondensators (C₁) gekoppelt ist;
einen ersten Schalter (Q₁), der zwischen der Masse und einem ersten gemeinsamen Knoten (n₁) zwischen dem Nichtpolaritätsende der ersten Wicklung (L₁) und dem Polaritätsende der zweiten Wicklung (L₂) gekoppelt ist;
einen zweiten Schalter (Q₂), der zwischen der Masse und einem zweiten gemeinsamen Knoten (n₂) zwischen dem Polaritätsende der dritten Wicklung (L₃) und dem Nichtpolaritätsende der vierten Wicklung (L₄) gekoppelt ist;
wobei jeder des ersten und des zweiten Schalters (Q₁, Q₂) betriebsbereit ist, um zwischen einem EIN-Zustand und einem AUS-Zustand zu schalten, wobei der erste und der zweite Schalter (Q₁, Q₂) alternativ im EIN-Zustand betätigt werden, wobei die Dauer des EIN-Zustands von einem des ersten und des zweiten Schalters (Q₁, Q₂) die Dauer des EIN-Zustands des anderen der ersten und des zweiten Schalters (Q₁, Q₂) überlappt;
einen ersten Erhöhungskondensator (C₃), der zwischen dem Nichtpolaritätsende der zweiten Wicklung (L₂) und der Anode der ersten Ausgangsdiode (D₃) gekoppelt ist;
einen zweiten Erhöhungskondensator (C₅), der zwischen dem Polaritätsende der vierten Wicklung (L₄) und der Anode der zweiten Ausgangsdiode (D₆) gekoppelt ist;
einen ersten Schaltkreis (3), umfassend
eine erste Klemmdiode (D₁) mit einer Anode, die mit dem ersten gemeinsamen Knoten (n₁) gekoppelt ist, und eine Kathode,
eine erste Ladediode (D₂) mit einer Anode, die mit der Kathode der ersten Klemmdiode (D₁) gekoppelt ist, und eine Kathode, die mit der Anode der ersten Ausgangsdiode (D₃) gekoppelt ist, und
einen ersten Klemmkondensator (C₂), der zwischen einem dritten gemeinsamen Knoten (n₃) zwischen der Kathode der ersten Klemmdiode (D₁) und der Anode der ersten Ladediode (D₂) und der Masse gekoppelt ist; und
einen zweiten Schaltkreis (4), umfassend
eine zweite Klemmdiode (D₄) mit einer Anode, die mit dem zweiten gemeinsamen Knoten (n₂) gekoppelt ist, und eine Kathode,
eine zweite Ladediode (D₅) mit einer Anode, die mit der Kathode der zweiten Klemmdiode (D₄) gekoppelt ist, und eine Kathode, die mit der Anode der zweiten Ausgangsdiode (D₆) gekoppelt ist, und
einen zweiten Klemmkondensator (C₄), der zwischen einem vierten gemeinsamen Knoten (n₄) zwischen der Kathode der zweiten Klemmdiode (D₄) und der Anode der zweiten Ladediode (D₅) und der Masse gekoppelt ist;
wobei, wenn sich der erste Schalter (Q₁) im EIN-Zustand befindet und sich der zweite Schalter (Q₂) im AUS-Zustand befindet, der erste Schaltkreis (3) betriebsbereit ist, um einen Massenpfad für die Anode der ersten Ausgangsdiode (D₃) durch die erste Ladediode (D₂) und den ersten Klemmkondensator (C₂) festzusetzen und der zweite Schaltkreis (4) betriebsbereit ist, um die Anode der zweiten Ausgangsdiode (D₂) von der Masse zu trennen so dass der Ausgangskondensator (C₁) durch die zweite Ausgangsdiode (D₆) mit der Eingangsspannung (V_{IN}), einer induzierten Spannung durch die dritte Wicklung (L₃), einer induzierten Spannung durch die vierte Wicklung (L₄) und einer Spannung durch den zweiten Erhöhungskondensator (C₅) geladen ist; und
wobei, wenn sich der erste Schalter (Q₁) im AUS-Zustand befindet und sich der zweite Schalter (Q₂) im EIN-Zustand befindet, der zweite Schaltkreis (4) betriebsbereit ist, um einen Massepfad für die Anode der zweiten Ausgangsdiode (D₆) durch die zweite Ladediode (D₅) und den zweiten Klemmkondensator (C₄) festzusetzen, und der erste Schaltkreis (3) betriebsbereit ist, um die Anode der ersten Ausgangsdiode (D₃) von der Masse zu trennen, so dass der Ausgangskondensator (C₁) durch die erste Ausgangsdiode (D₃) mit der Eingangsspannung (V_{IN}), einer induzierten Spannung durch die erste Wicklung (L₁), einer induzierten Spannung durch die zweite Wicklung (L₂) und einer Spannung durch den ersten Erhöhungskondensator (C₃) geladen wird.

2. Erhöhungsvorrichtung nach Anspruch 1, wobei, wenn der erste Schalter (Q₁) aus dem EIN-Zustand in den AUS-Zustand geschaltet wird, während sich der zweite Schalter (Q₂) im EIN-Zustand befindet, der erste Schaltkreis (3) betriebsbereit ist, um einen Massepfad für den ersten gemeinsamen Knoten (n₁) durch die erste Klemmdiode (D₁) und den ersten Klemmkondensator (C₂) festzusetzen, um eine Spannung durch den ersten Schalter (Q1) zu klemmen.

3. Erhöhungsvorrichtung nach Anspruch 2, wobei der erste Schaltkreis (3) ferner Energie empfängt, die einer Streuinduktivität (Lₖ₁) der ersten Wicklung (L₁) zugewiesen ist.

4. Erhöhungsvorrichtung nach Anspruch 1, wobei, wenn der zweite Schalter (Q₂) aus dem EIN-Zustand in den AUS-Zustand geschaltet wird, während sich der erste Schalter (Q₁) im EIN-Zustand befindet, der zweite Schaltkreis (4) betriebsbereit ist, um einen Massepfad für den zweiten gemeinsamen Knoten (n₂) durch die zweite Klemmdiode (D₄) und den zweiten Klemmkondensator (C₄) festzusetzen, um eine Spannung durch den zweiten Schalter (Q₂) zu klemmen.

5. Erhöhungsvorrichtung nach Anspruch 4, wobei der zweite Schaltkreis (4) ferner Energie empfängt, die einer Streuinduktivität (Lₖ₃) der dritten Wicklung (L₃) zugewiesen ist.

6. Erhöhungsvorrichtung nach Anspruch 1, wobei
wenn sich der erste Schalter (Q₁) im EIN-Zustand befindet und sich der zweite Schalter (Q₂) im AUS-Zustand befindet, die zweite Wicklung (L₂), der erste Schalter (Q₁), der erste Klemmkondensator (C₂) und die erste Ladediode (D₂) des ersten Schaltkreises (3) und der erste Erhöhungskondensator (C₃) eine Schaltschleife bilden, so dass der erste Erhöhungskondensator (C₃) mit einer induzierten Spannung durch die zweite Wicklung (L₂) und eine Spannung durch den ersten Klemmkondensator (C₂) geladen wird; und
wenn sich der erste Schalter (Q₁) im AUS-Zustand befindet und sich der zweite Schalter (Q₂) im EIN-Zustand befindet, die vierte Wicklung (L₄), der zweite Schalter (Q₂), der zweite Klemmkondensator (C₄) und die zweite Ladediode (D₅) des zweiten Schaltkreises (4) und der zweite Erhöhungskondensator (C₅) eine Schaltschleife bilden, so dass der zweite Erhöhungskondensator (C₅) mit einer induzierten Spannung durch die vierte Wicklung (L₄) und einer Spannung durch den zweiten Klemmkondensator (C₄) geladen wird.

7. Erhöhungsvorrichtung nach Anspruch 1, wobei der erste und der zweite Schalter (Q₁, Q₂) den gleichen Arbeitszyklus aufweisen.

## Revendications

1. Dispositif élévateur destiné à élever une tension d'entrée (V_{IN}) fournie par une source d'alimentation externe à une tension de sortie (V_{H}), comprenant :
un transformateur (2) présentant des premier, deuxième, troisième et quatrième enroulements (L₁, L₂, L₃, L₄) enroulés autour d'un noyau de fer et présentant chacun une extrémité à polarité et une extrémité sans polarité, un taux d'enroulement des premier, deuxième, troisième et quatrième enroulements (L₁, L₂, L₃, L₄) étant égal à 1 : N : 1 : N, ladite extrémité à polarité dudit premier enroulement (L₁) étant apte à être couplée à la source d'alimentation externe et étant couplée à ladite extrémité sans polarité dudit troisième enroulement (L₃), ladite extrémité sans polarité dudit premier enroulement (L₁) étant couplée à ladite extrémité à polarité dudit deuxième enroulement (L₂), ladite extrémité à polarité dudit troisième enroulement (L₃) étant couplée à ladite extrémité sans polarité dudit quatrième enroulement (L₄);
un condensateur de sortie (C₁) présentant une première borne et une seconde borne mise à la terre, la tension de sortie (V_{H}) étant une tension à travers ledit condensateur de sortie (C₁) ;
une première diode de sortie (D₃) présentant une anode, et une cathode couplée à ladite première borne dudit condensateur de sortie (C₁) ;
une seconde diode de sortie (D₆) présentant une anode, et une cathode couplée à ladite première borne dudit condensateur de sortie (C₁) ;
un premier commutateur (Q₁) couplé entre la terre et un premier noeud commun (n₁) entre ladite extrémité sans polarité dudit premier enroulement (L₁) et ladite extrémité à polarité dudit deuxième enroulement (L₂) ;
un second commutateur (Q₂) couplé entre la terre et un deuxième noeud commun (n₂) entre ladite extrémité à polarité dudit troisième enroulement (L₃) et ladite extrémité sans polarité dudit quatrième enroulement (L₄);
chacun desdits premier et second commutateurs (Q₁, Q₂) étant exploitable de manière à commuter entre un état « MARCHE » et un état « ARRÊT », lesdits premier et second commutateurs (Q₁, Q₂) étant exploités en alternance dans l'état « MARCHE », dans lequel la durée de l'état « MARCHE » de l'un desdits premier et second commutateurs (Q₁, Q₂) chevauche la durée de l'état « MARCHE » de l'autre desdits premier et second commutateurs (Q₁, Q₂) ;
un premier condensateur élévateur (C₃) couplé entre ladite extrémité sans polarité dudit deuxième enroulement (L₂) et ladite anode de ladite première diode de sortie (D₃);
un second condensateur élévateur (C₅) couplé entre ladite extrémité à polarité dudit quatrième enroulement (L₄) et ladite anode de ladite seconde diode de sortie (D₆);
un premier circuit de commutation (3) incluant :
une première diode de fixation de niveau (D₁) présentant une anode couplée audit premier noeud commun (n₁), et une cathode ;
une première diode de charge (D₂) présentant une anode couplée à ladite cathode de ladite première diode de fixation de niveau (D₁), et une cathode couplée à ladite anode de ladite première diode de sortie (D₃) ; et
un premier condensateur de fixation de niveau (C₂) couplé entre un troisième noeud commun (n₃), entre ladite cathode de ladite première diode de fixation de niveau (D₁) et ladite anode de ladite première diode de charge (D₂), et la terre; et
un second circuit de commutation (4) incluant :
une seconde diode de fixation de niveau (D₄) présentant une anode couplée audit deuxième noeud commun (n₂), et une cathode;
une seconde diode de charge (D₅) présentant une anode couplée à ladite cathode de ladite seconde diode de fixation de niveau (D₄), et une cathode couplée à ladite anode de ladite seconde diode de sortie (D₆); et
un second condensateur de fixation de niveau (C₄) couplé entre un quatrième noeud commun (n₄), entre ladite cathode de ladite seconde diode de fixation de niveau (D₄) et ladite anode de ladite seconde diode de charge (D₅), et la terre;
dans lequel, lorsque ledit premier commutateur (Q₁) est dans l'état « MARCHE » et ledit second commutateur (Q₂) est dans l'état « ARRÊT », ledit premier circuit de commutation (3) est exploitable de manière à établir un trajet de mise à la terre pour ladite anode de ladite première diode de sortie (D₃) à travers ladite première diode de charge (D₂) et ledit premier condensateur de fixation de niveau (C₂), et ledit second circuit de commutation (4) est exploitable de manière à déconnecter ladite anode de ladite seconde diode de sortie (D₂) de la terre, de sorte que ledit condensateur de sortie (C₁) est chargé à travers ladite seconde diode de sortie (D₆) avec la tension d'entrée (V_{IN}), une tension induite à travers ledit troisième enroulement (L₃), une tension induite à travers ledit quatrième enroulement (L₄) et une tension à travers ledit second condensateur élévateur (C₅); et
dans lequel, lorsque ledit premier commutateur (Q₁) est dans l'état « ARRÊT » et ledit second commutateur (Q₂) est dans l'état « MARCHE », ledit second circuit de commutation (4) est exploitable de manière à établir un trajet de mise à la terre pour ladite anode de ladite seconde diode de sortie (D₆) à travers ladite seconde diode de charge (D₅) et ledit second condensateur de fixation de niveau (C₄), et ledit premier circuit de commutation (3) est exploitable de manière à déconnecter ladite anode de ladite première diode de sortie (D₃) de la terre, de sorte que ledit condensateur de sortie (C₁) est chargé à travers ladite première diode de sortie (D₃) avec la tension d'entrée (V_{IN}), une tension induite à travers ledit premier enroulement (L₁), une tension induite à travers ledit deuxième enroulement (L₂) et une tension à travers ledit premier condensateur élévateur (C₃).

2. Dispositif élévateur selon la revendication 1, dans lequel, lorsque ledit premier commutateur (Q₁) est commuté de l'état « MARCHE » à l'état « ARRÊT » tandis que ledit second commutateur (Q₂) est dans l'état « MARCHE », ledit premier circuit de commutation (3) est exploitable de manière à établir un trajet de mise à la terre pour ledit premier noeud commun (n₁) à travers ladite première diode de fixation de niveau (D₁) et ledit premier condensateur de fixation de niveau (C₂) en vue de fixer une tension à travers ledit premier commutateur (Q₁).

3. Dispositif élévateur selon la revendication 2, dans lequel ledit premier circuit de commutation (3) reçoit en outre de l'énergie attribuée à une inductance de fuite (Lₖ₁) dudit premier enroulement (L₁).

4. Dispositif élévateur selon la revendication 1, dans lequel, lorsque ledit second commutateur (Q₂) est commuté de l'état « MARCHE » à l'état « ARRÊT » tandis que ledit premier commutateur (Q₁) est dans l'état « MARCHE », ledit second circuit de commutation (4) est exploitable de manière à établir un trajet de mise à la terre pour ledit deuxième noeud commun (n₂) à travers ladite seconde diode de fixation de niveau (D₄) et ledit second condensateur de fixation de niveau (C₄) en vue de fixer une tension à travers ledit second commutateur (Q₂).

5. Dispositif élévateur selon la revendication 4, dans lequel ledit second circuit de commutation (4) reçoit en outre de l'énergie attribuée à une inductance de fuite (Lₖ₃) dudit troisième enroulement (L₃).

6. Dispositif élévateur selon la revendication 1, dans lequel:
lorsque ledit premier commutateur (Q₁) est dans l'état « MARCHE » et ledit second commutateur (Q₂) est dans l'état «ARRÊT », ledit deuxième enroulement (L₂), ledit premier commutateur (Q₁), ledit premier condensateur de fixation de niveau (C₂) et ladite première diode de charge (D₂) dudit premier circuit de commutation (3), et ledit premier condensateur élévateur (C₃), forment une boucle de circuit de sorte que ledit premier condensateur élévateur (C₃) est chargé avec une tension induite à travers ledit deuxième enroulement (L₂) et une tension à travers ledit premier condensateur de fixation de niveau (C₂) ; et
lorsque ledit premier commutateur (Q₁) est dans l'état « ARRÊT » et ledit second commutateur (Q₂) est dans l'état « MARCHE », ledit quatrième enroulement (L₄), ledit second commutateur (Q₂), ledit second condensateur de fixation de niveau (C₄) et ladite seconde diode de charge (D₅) dudit second circuit de commutation (4), et ledit second condensateur élévateur (C₅), forment une boucle de circuit, de sorte que ledit second condensateur élévateur (C₅) est chargé avec une tension induite à travers ledit quatrième enroulement (L₄) et une tension à travers ledit second condensateur de fixation de niveau (C₄).

7. Dispositif élévateur selon la revendication 1, dans lequel lesdits premier et second commutateurs (Q₁, Q₂) présentent le même cycle de service.
